# EUROPEAN PATENT SPECIFICATION

(11) **EP 4 246 606 B1**
(45) Date of publication and mention of the grant of the patent: **02.04.2025**
(21) Application number: 23158381.6
(22) Date of filing: 24.02.2023
(51) Int. Cl.: H01M 4/04, H01M 50/403, G01B 11/06, H01M 10/04, B05C 11/10, H01M 4/66

(54) **ELECTRODE MANUFACTURING APPARATUS, METHOD FOR MANUFACTURING ELECTRODE, APPARATUS FOR MANUFACTURING ELECTROCHEMICAL DEVICE, AND METHOD FOR MANUFACTURING ELECTROCHEMICAL DEVICE**
ELEKTRODENHERSTELLUNGSVORRICHTUNG, VERFAHREN ZUR HERSTELLUNG EINER ELEKTRODE, VORRICHTUNG ZUR HERSTELLUNG EINER ELEKTROCHEMISCHEN VORRICHTUNG UND VERFAHREN ZUR HERSTELLUNG EINER ELEKTROCHEMISCHEN VORRICHTUNG
APPAREIL DE FABRICATION D'ÉLECTRODE, PROCÉDÉ DE FABRICATION D'ÉLECTRODE, APPAREIL DE FABRICATION DE DISPOSITIF ÉLECTROCHIMIQUE ET PROCÉDÉ DE FABRICATION DE DISPOSITIF ÉLECTROCHIMIQUE

(30) Priority: 15.03.2022 JP 2022039779
(43) Date of publication of application: 20.09.2023
(73) Proprietor: Ricoh Company, Ltd., Tokyo 143-8555 (JP)
(72) Inventor: YAMASAWA, Aya, Tokyo, 143-8555 (JP)
(74) Representative: SSM Sandmair

(56) References cited:
- EP-A1- 4 120 425
- EP-B1- 2 461 395
- EP-B1- 2 894 698
- KR-A- 20130 015 398
- US-A1- 2020 335 756

## Description

### BACKGROUND

### Technical Field

The present disclosure relates to an electrode manufacturing apparatus, a method for manufacturing an electrode, an apparatus for manufacturing an electrochemical device, and a method for manufacturing an electrochemical device.

### Related Art

Exemplary electrochemical devices include a lithium-ion secondary battery, an electric double layer capacitor, a lithium-ion capacitor, and a redox capacitor. Among others, the secondary battery, which is repeatedly chargeable and dischargeable, is severely required to be desirable in safety and reliability because of uses of the secondary battery. Desirability in safety and reliability is also required of electrodes of electrochemical devices.

In order not to cause problems including ignition, the quality of manufacture needs to be strictly maintained in manufacturing processes. Consequently, the quality of manufacture also needs to be maintained for an electrode as a material of an electrochemical device.

Japanese Unexamined Patent Application Publication No. 2009-266739 discloses a secondary battery manufacturing method including: acquiring, as position information, identification information on an electrode material used for assembly and a position of a portion expected for use of the electrode material used for assembly; acquiring quality information on the portion expected for use of the electrode material, based on the identification information and position as acquired; and deciding a portion of the electrode material that is to be actually used for assembly, based on the quality information as acquired.

### SUMMARY

An electrode manufacturing apparatus includes: an applier configured to apply a liquid composition to form an insulating layer onto an electrode base or a functional layer on the electrode base; a controller configured to control the applier; and a surface detector configured to detect a surface condition of the liquid composition or the insulating layer on the electrode base or the functional layer, wherein the controller is configured to control the applier based on the surface condition of the liquid composition or the insulating layer detected by the surface detector, characterized in that the controller is configured to change a pattern to be formed on the electrode base or the functional layer to increase an amount of the liquid composition to be applied onto the electrode base or the functional layer.

### BRIEF DESCRIPTION OF THE DRAWINGS

A more complete application of embodiments of the present disclosure and many of the attendant advantages and features thereof can be readily obtained and understood from the following detailed description with reference to the accompanying drawings, wherein:
FIG. 1 is an example of a diagram illustrating a general arrangement of an electrode manufacturing apparatus according to an embodiment of the present disclosure;
FIG. 2 is a function block diagram of the electrode manufacturing apparatus and an electrode manufacturing apparatus control section;
FIG. 3 is a diagram illustrating a hardware configuration of an electrode manufacturing apparatus control section according to the embodiment;
FIG. 4 is a flowchart illustrating an example of processing for controlling a discharge amount;
FIGS. 5A and 5B are conceptual diagrams of formation of an insulating layer by discharge of a liquid composition;
FIGS. 6A through 6C are plan views of the electrode manufacturing apparatus, illustrating how a streak-like defect is produced;
FIGS. 7A through 7C are each another example of the diagram illustrating the general arrangement of the electrode manufacturing apparatus according to the embodiment;
FIG. 8 illustrates an example of an optical system of a surface detector;
FIGS. 9A through 9C each illustrate an example of a result of detection by the surface detector;
FIG. 10 is a flowchart of defect detection;
FIG. 11 is a flowchart of discharge amount regulation based on defect spot information output;
FIGS. 12A through 12D illustrate examples of a discharge amount regulating method; and
FIG. 13 is a flowchart of a method for gradually regulating the discharge amount.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In an electrode manufacturing apparatus of the present disclosure, in electrode manufacturing processes, a surface detector detects a surface condition of an insulating layer after application of a liquid composition and an application controller controls an applier based on the detected surface condition.

In the following, the electrode manufacturing apparatus of the present disclosure is described in detail using the drawings.

### [Electrode Manufacturing Apparatus 1]

### [General Arrangement]

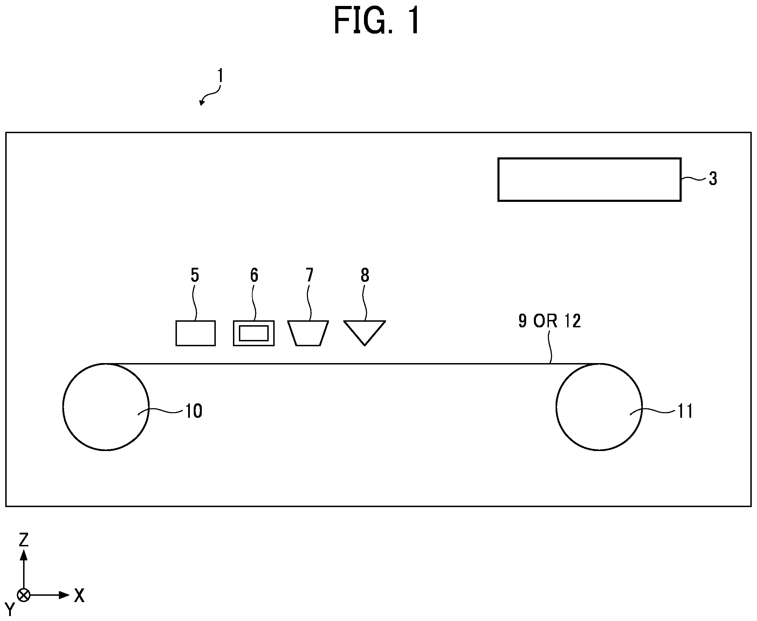

FIG. 1 is an example of a diagram illustrating a general arrangement of an electrode manufacturing apparatus according to an embodiment of the present disclosure.

As illustrated in FIG. 1, an electrode manufacturing apparatus 1 of the present embodiment includes a winding off part 10 and a winding up part 11 that bear a conveying function, a discharger 5 as an example of an applier of a liquid composition, a curing device 6, a heater 7, a surface detector 8, an electrode base 9, a functional layer 12 provided on the electrode base 9, and a system control section 3. The details of the system control section 3 will be described later.

FIG. 1 illustrates the electrode base 9, which is a discharge target material as an object of application, or the inside of the electrode manufacturing apparatus 1 as viewed in a Y direction orthogonal to a conveyance direction X of the electrode base 9.

The surface detector 8 is arranged on a downstream side in the conveyance direction X, which is a direction where the discharge target material with the liquid composition discharged by the discharger 5 to the discharge target material is conveyed. The surface detector 8 is arranged with the curing device 6 and the heater 7 in any order.

The electrode manufacturing apparatus 1 uses a liquid composition 24 that is a material for forming an insulating layer 21 as a resin layer 22 or an inorganic layer 23, to form the insulating layer 21 as the resin layer 22 or the inorganic layer 23 so that the insulating layer 21 may cover a surface of the electrode base 9 or a surface of the functional layer 12 provided on the electrode base 9, and detects a surface condition of the insulating layer 21 as the resin layer 22 or the inorganic layer 23 with the surface detector 8 provided downstream of the discharger 5.

### (Conveyance)

The electrode manufacturing apparatus 1 conveys the discharge target material by the winding off part 10 and the winding up part 11 and discharges, with the discharger 5, the liquid composition 24 to the discharge target material being conveyed, so as to form the insulating layer 21 as the resin layer 22 or the inorganic layer 23 so that the insulating layer 21 may cover a surface of the discharge target material, that is to say, the surface of the electrode base 9 or the surface of the functional layer 12 provided on the electrode base 9.

In the present embodiment, the winding off part 10 is used as a means for winding off the discharge target material, and the winding up part 11 is used as a means for winding up the discharge target material. The winding off part 10 rotates the discharge target material stored in a roll form, so as to feed the discharge target material to a conveyance path of the electrode manufacturing apparatus 1. The winding up part 11 winds up the discharge target material, to which the liquid composition 24 has been discharged so as to form the insulating layer 21, and stores the discharge target material in a roll form. Also in relation to other processes, the coating speed on the electrode manufacturing apparatus 1 is preferably 30 [m/min.] to 100 [m/min.]. Such coating speed allows the electrode manufacturing apparatus 1 to be suitably used even if the insulating layer 21 needs to be formed at a high speed.

The discharge target material is a base material continuing in the conveyance direction X. In this instance, the base material includes the electrode base 9 and the functional layer 12 provided on the electrode base 9. The electrode manufacturing apparatus 1 conveys the discharge target material along the conveyance path between the winding off part 10 and the winding up part 11. The length in the conveyance direction X of the discharge target material is at least larger than the length of the conveyance path between the winding off part 10 and the winding up part 11. The electrode manufacturing apparatus 1 is to successively form the insulating layer 21 on the discharge target material, which continues in the conveyance direction X.

### (Discharge Target Material)

The electrode base 9 according to the present embodiment includes an electroconductive foil with planarity that is, in general, suitably used for a power storage device such as a secondary battery and a capacitor, among others a lithium-ion secondary battery. Examples of the electroconductive foil to be used include an aluminum foil, a copper foil, a stainless steel foil, a titanium foil, an etched foil obtained by etching any of such foils so as to make minute holes, and a perforated electrode base used for a lithium-ion capacitor. A carbon paper-fibrous electrode for a power generation device such as a fuel cell, which electrode is made nonwoven or woven and planar, and a perforated electrode base whose holes are minute are usable as the electrode base 9.

### (Functional Layer Provided on Electrode Base)

The functional layer 12 provided on the electrode base 9 according to the present embodiment includes a layer containing an active material. A powdery active material or catalyst composition is dispersed or dissolved in liquid, and the resultant liquid is coated, fixed, and dried on the electrode base 9 so as to form the functional layer 12 provided on the electrode base 9.

In order to form the functional layer 12 provided on the electrode base 9, a spray, a dispenser, a die coater, a lift coating technique or the like is used, and the liquid composition 24 as coated is dried after coating so as to form the functional layer 12 provided on the electrode base 9. A powdery active material or catalyst composition is dispersed or dissolved in liquid, and the resultant liquid is coated, fixed, and dried on the electrode base 9 so as to form the functional layer 12 provided on the electrode base 9.

A cathode active material is not particularly limited as long as the material reversibly occludes and releases alkali metal ions. Typically, an alkali metal-containing transition metal compound is used as an active material for cathode. For instance, a complex oxide containing at least one element selected from the group consisting of cobalt, manganese, nickel, chromium, iron, and vanadium, and lithium is mentioned as a lithium-containing transition metal compound. The alkali metal-containing transition metal compound is exemplified by a lithium-containing transition metal compound such as lithium cobalt oxide, lithium nickel oxide, and lithium manganese oxide, an olivine type lithium salt such as LiFePO₄, a chalcogenide such as titanium disulfide and molybdenum disulfide, manganese dioxide, and the like. The lithium-containing transition metal compound refers to a metal oxide containing lithium and a transition metal or the metal oxide, in which the transition metal is partially substituted with a hetero element. Examples of the hetero element include Na, Mg, Se, Y, Mn, Fe, Co, Ni, Cu, Zn, Al, Cr, Pb, Sb, and B, with Mn, Al, Co, Ni, and Mg being especially preferred. The hetero element may be one or two or more in kind. The above cathode active materials may be used alone or in combination of two or more. Examples of the active material for a nickel-hydrogen battery include nickel hydroxide.

An anode active material is not particularly limited as long as the material reversibly occludes and releases alkali metal ions. Typically, a carbon material including graphite having a graphitic crystal structure is used as an anode active material. Such carbon material is exemplified by natural graphite, spherical or fibrous synthetic graphite, hardly graphitizable carbon (hard carbon), readily graphitizable carbon (soft carbon), and the like. Other suitable materials than the carbon material include lithium titanate. From the viewpoint of raise in energy density of a lithium-ion battery, a high capacitance material, such as silicon, tin, a silicon alloy, a tin alloy, silicon oxide, silicon nitride, and tin oxide, is also used suitably as an anode active material. A hydrogen-occluding alloy usable as an anode active material for the nickel-hydrogen battery is exemplified by an AB2 type or A2B type hydrogen-occluding alloy that is typified by Zr-Ti-Mn-Fe-Ag-V-Al-W, Ti₁₅Zr₂₁V₁₅Ni₂₉Cr₅Co₅Fe₁Mn₈, and the like.

A substance usable for a binding agent for a cathode or an anode is exemplified by polyvinylidene fluoride (PVDF), polytetrafluoroethylene (PTFE), polyethylene, polypropylene, an aramid resin, polyamide, polyimide, polyamide imide, polyacrylonitrile, polyacrylic acid, polymethyl acrylate ester, polyethyl acrylate ester, polyhexyl acrylate ester, polymethacrylic acid, polymethyl methacrylate ester, polyethyl methacrylate ester, polyhexyl methacrylate ester, polyvinyl acetate, polyvinylpirroridone, polyether, polyethersulfone, polyhexafluoropropylene, styrene-butadiene rubber, carboxymethyl cellulose, and the like. A copolymer of two or more materials selected from among tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may also be used. Two or more selected from such substances may be mixed together and used as such.

Examples of a substance used for an electroconductive agent to be contained in an electrode include graphite such as natural graphite and synthetic graphite, carbon black such as acetylene black, Ketjen black, channel black, furnace black, lamp black, and thermal black, electroconductive fibers such as carbon fibers and metal fibers, fluorocarbon, metal powder such as aluminum powder, electroconductive whiskers of zinc oxide, potassium titanate or the like, an electroconductive metal oxide such as titanium oxide, and an organic electroconductive material such as a phenylene derivative and a graphene derivative.

An active material in a fuel cell normally uses, as a catalyst for the cathode or the anode, fine particles of metal, such as platinum, ruthenium, and a platinum alloy, carried by a catalyst carrier such as carbon. For instance, the catalyst carrier is suspended in water, a catalyst particle precursor is added to and dissolved in the suspension (using a substance containing an alloy component, such as chloroplatinic acid, dinitrodiaminoplatinum, platinic chloride, platinous chloride, bisacetylacetonatoplatinum, dichlorodiammine platinum, dichlorotetramine platinum, platinic sulphate chlororuthenic acid, iridium chloride acid, rhodium chloride acid, ferric chloride, cobalt chloride, chromium chloride, gold chloride, silver nitrate, rhodium nitrate, palladium chloride, nickel nitrate, iron sulphate, and copper chloride), then an alkali is added to the solution so as to produce a metal hydroxide and allow the catalyst carrier to support the metal hydroxide on a surface of the catalyst carrier. The resultant catalyst carrier is coated onto the electrode and reduction is caused in a hydrogen atmosphere or the like so as to achieve the electrode, which has the catalyst particles (active material) coated to a surface of the electrode.

(Resin Layer or Inorganic Layer) In the present embodiment in particular, the liquid composition 24 is discharged by the discharger 5 to the functional layer 12 provided on the electrode base 9 so as to form the resin layer 22 or the inorganic layer 23. The liquid composition 24 is not particularly limited as long as the liquid composition 24 has a viscosity allowing the discharge by the discharger 5 or a surface tension allowing the formation on the functional layer 12 provided on the electrode base 9.

(Discharger of Liquid Composition) As illustrated in FIG. 1, the electrode manufacturing apparatus 1 includes the discharger 5 as a means for discharging the liquid composition 24. The discharger 5 includes multiple nozzle arrays each having multiple nozzles arranged in a width direction of the discharge target material (the Y direction). In the electrode manufacturing apparatus 1, the discharger 5 of the liquid composition 24 is provided so that the liquid composition 24 may be discharged through the nozzles toward the discharge target material. In the discharger 5, a means for stimulating the liquid composition 24 so as to discharge the liquid composition 24 is selected appropriately to the purpose, so that it does not matter whether the means is of a piezoelectric type using a piezoelectric element, of a thermal type using a heater, of a valve type using a pressure device, or of some other type.

The discharger 5 includes a discharge unit for the liquid composition 24. The discharge unit for the liquid composition 24 includes an aggregation of functional parts and mechanisms involved in the discharge of the liquid composition 24 from the discharger 5. The discharge unit for the liquid composition 24 includes at least one out of configurations of a supply mechanism, a maintenance mechanism, and a liquid discharging head movement mechanism, as combined with the discharger 5.

Control of the discharger 5 in relation to the discharge of the liquid composition 24 is exerted by a discharge control unit 40 as an example of an application controller in the system control section 3 illustrated in FIG. 1. The "discharge control unit 40" may be also referred to as a "controller".

The discharge control unit 40 controls the timing of discharge of the liquid composition 24, the position where a droplet of the liquid composition 24 is to be discharged, and the size of each droplet.

### (Surface Detector)

The surface detector 8 is an example of a detection means that observes and outputs the surface condition of the insulating layer 21 (the resin layer 22 or the inorganic layer 23) formed on the discharge target material. The electrode manufacturing apparatus 1 acquires quality information on the insulating layer 21 (the resin layer 22 or the inorganic layer 23) formed on the discharge target material, based on an observation result output by the surface detector 8.

A method of detection by the surface detector 8 will be detailed later.

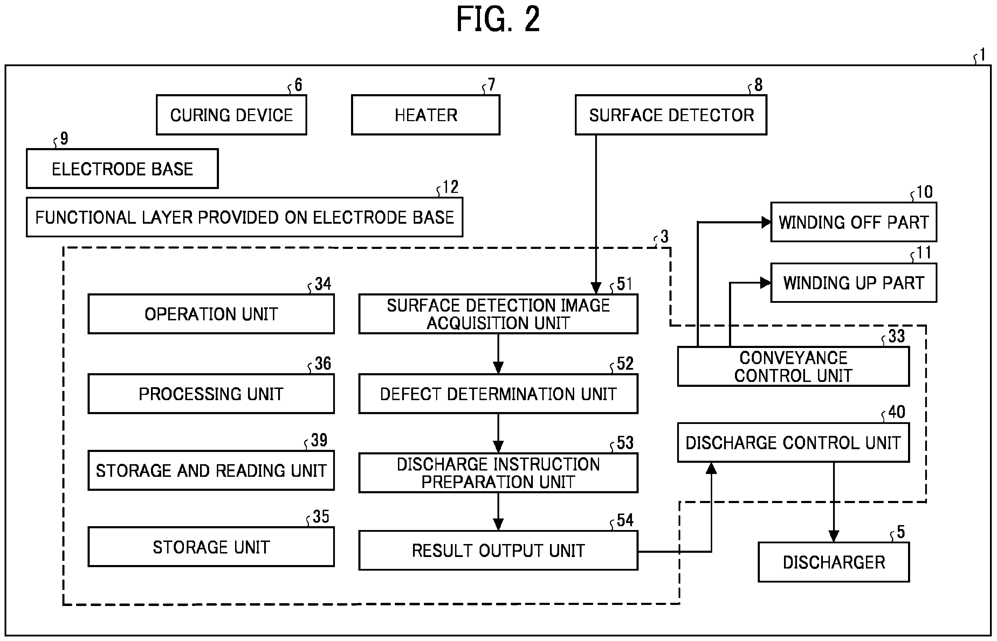

As illustrated in FIG. 2, the electrode manufacturing apparatus 1 includes the system control section 3. The system control section 3 controls operations of the whole electrode manufacturing apparatus 1.

The system control section 3 includes an operation unit 34, a storage unit 35, a storage and reading unit 39, and the discharge control unit 40.

The operation unit 34 includes a touch panel, accepts an operation input by a user of the electrode manufacturing apparatus 1, and displays a state and settings of the electrode manufacturing apparatus 1 on a screen.

The discharge control unit 40 controls the discharger 5 in relation to the discharge of the liquid composition 24.

### (System Control Section)

As illustrated in FIG. 2, the electrode manufacturing apparatus 1 includes the system control section 3.

The system control section 3 includes the operation unit 34, the storage unit 35, the storage and reading unit 39, a processing unit 36, a surface detection image acquisition unit 51, a defect determination unit 52, a discharge instruction preparation unit 53, a result output unit 54, a conveyance control unit 33, and the discharge control unit 40. Functions of the respective units will be described later.

The system control section 3 is arranged in any position inside or outside the electrode manufacturing apparatus 1. If the system control section 3 is arranged outside, exchange of control signals and data is carried out over various communications networks. The communications networks include the Internet, a mobile communication network, and a local area network (LAN). In addition to a wired communications network, a network based on wireless communication, such as the third generation mobile communication system (3G), the worldwide interoperability for microwave access (WiMAX), and the long term evolution (LTE),may be included in the communications networks. The electrode manufacturing apparatus 1 sends and receives communications by a short range communication technology such as the near field communication (NFC) (registered trademark).

### [Hardware Configuration]

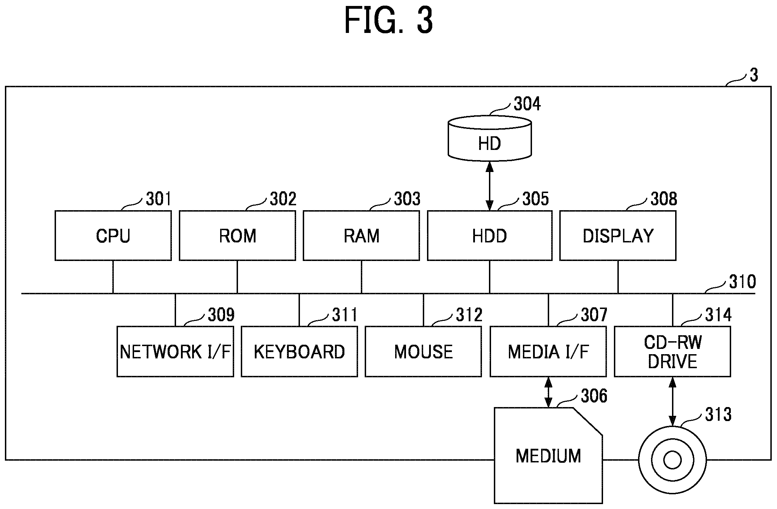

Using FIG. 3, a hardware configuration of the system control section 3 is described below.

### [Hardware Configuration of System Control Section]

FIG. 3 is a diagram illustrating a hardware configuration of the system control section 3.

As illustrated in FIG. 3, the system control section 3 includes a central processing unit (CPU) 301, a read-only memory (ROM) 302, a random access memory (RAM) 303, a hard disk (HD) 304, a hard disk drive (HDD) 305, a medium 306, a media interface (I/F) 307, a display 308, a network I/F 309, a keyboard 311, a mouse 312, a compact disc rewritable (CD-RW) drive 314, and a bus line 310.

The CPU 301 controls operations of the whole system control section 3. The ROM 302 stores a program used to drive the CPU 301. The RAM 303 is used as a work area of the CPU 301. The HD 304 stores various kinds of data such as a program. The HDD 305 controls reading or writing of various kinds of data from or on the HD 304 in accordance with the control by the CPU 301. The media I/F 307 controls reading or writing (storing) of data from or on the medium 306 such as a flash memory. The display 308 displays various kinds of information such as a cursor, a menu, a window, a letter, and an image. The network I/F 309 is an interface for using a communications network 100 to perform data communication. The keyboard 311 is an example of input means provided with multiple keys for inputting letters, numerical values, various instructions, and the like. The mouse 312 is an example of input means for selecting and executing various instructions, selecting an object of processing, moving a cursor, and so forth. The CD-RW drive 314 controls reading or writing of various kinds of data from or on a CD-RW (image management server) 313 as an example of a removable recording medium.

The CD-RW drive 314 may be replaced by a digital versatile disc recordable (DVD-R) drive. The system control section 3 may include multiple computers that the respective units (functions, means or storages) are dividedly and optionally assigned to.

### [Configuration, Function, and Detailed Operation of System Control Section]

FIG. 2 as a function block diagram of the electrode manufacturing apparatus 1 includes a function block diagram of the system control section 3. Using FIGS. 2 and 3, operations of the system control section 3 are described below.

As illustrated in FIG. 2, the system control section 3 includes the operation unit 34, the storage unit 35, the storage and reading unit 39, the processing unit 36, the surface detection image acquisition unit 51, the defect determination unit 52, the discharge instruction preparation unit 53, the result output unit 54, the conveyance control unit 33, and the discharge control unit 40.

The above units each represent a function realized, or a means functioning, based on the fact that one of the components illustrated in FIG. 3 operates in line with a command from the CPU 301 following a program developed from the HD 304 onto the RAM 303. The system control section 3 includes the storage unit 35, which includes the RAM 303 and the HD 304 illustrated in FIG. 3.

The operation unit 34 is chiefly realized by a command from the CPU 301 illustrated in FIG. 3, and receives a signal from the keyboard 311 or the mouse 312 operated by the user, so as to accept various operations by the user. The operations thus accepted are each realized by a command from the CPU 301 illustrated in FIG. 3, so as to cause various images or screens to be displayed on the display 308 provided on the operation unit 34.

The processing unit 36 is realized by a command from the CPU 301 illustrated in FIG. 3, and performs total control of the electrode manufacturing apparatus 1.

The storage and reading unit 39 is realized by a command from the CPU 301 illustrated in FIG. 3, as well as the HDD 305, the media I/F 307, and the CD-RW drive 314, and performs a process for storing various kinds of data in the storage unit 35, the medium 306, and the CD-RW 313 and a process for reading various kinds of data from the storage unit 35, the medium 306, and the CD-RW 313.

Among controls exerted on the electrode manufacturing apparatus 1, the discharge control unit 40 exerts control on the discharger 5 chiefly based on information detected by the surface detector 8. The conveyance control unit 33 controls the winding off part 10 and the winding up part 11. The timing of discharge and the discharge amount of the liquid composition 24 are controlled. Such control functions are realized by an electric circuit, and part of the functions may be realized by software (a CPU). The functions may also be realized by multiple circuits or multiple software programs. The conveyance control unit 33 controls the start and stop of conveyance of the discharge target material by the winding off part 10 and the winding up part 11, or the conveyance speed and the like.

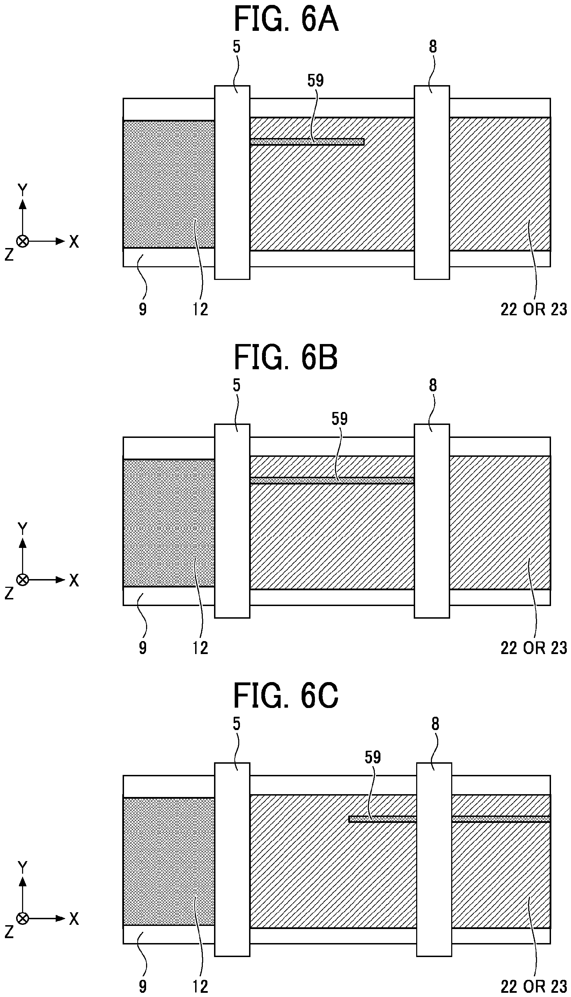

If the surface detection image acquisition unit 51 acquires a surface detection image from the surface detector 8, the defect determination unit 52 starts defect distinction. The defect determination unit 52 distinguishes defects. The defect refers to a fault causing fall of a material characteristic value of the functional layer 12, such as a streak, a pinhole, unevenness, foreign matter, and a shortage of film thickness. An item in the quality information that should be regarded as a defect and such parameters as the size of a defect are assumed to be set by the user in advance. In a statement about FIGS. 6A through 6C to be given later, a streak-like defect is taken up.

If no defects are present, a log notifying that change in discharge amount is unnecessary is prepared in the discharge instruction preparation unit 53, and the result output unit 54 sends an instruction with such contents to the discharge control unit 40. If a defect is present, an instruction to increase the discharge amount is prepared in the discharge instruction preparation unit 53 and sent from the result output unit 54 to the discharge control unit 40.

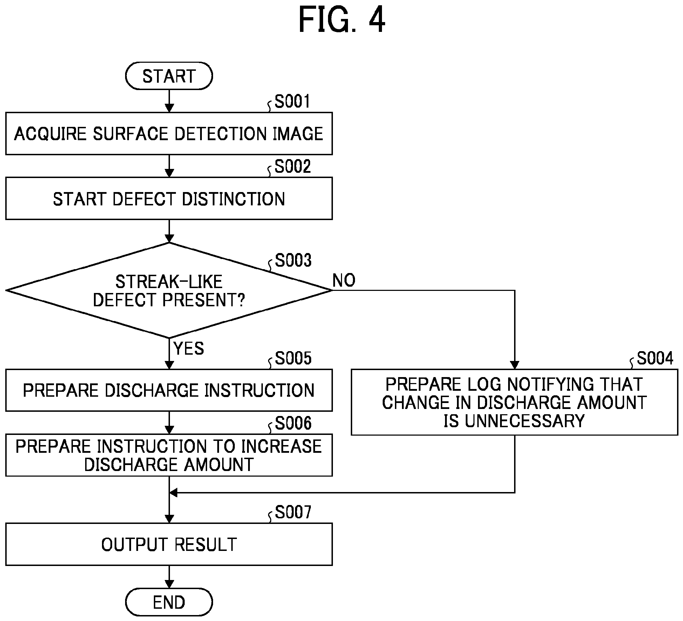

FIG. 4 is a flowchart illustrating an example of processing for controlling the discharge amount.

Initially, the surface detection image acquisition unit 51 acquires a surface detection image from the surface detector 8 (step S001).

Then, the defect determination unit 52 starts to distinguish between the presence and the absence of a defect (step S002).

The defect determination unit 52 determines whether a streak-like defect is present (step S003), and, if the defect is not present, the log notifying that the change in discharge amount is unnecessary is prepared (step S004).

If the defect is present, the defect determination unit 52 instructs to prepare a discharge instruction (step S005), and the discharge instruction preparation unit 53 prepares an instruction to increase the discharge amount (step S006).

In the end, a result with contents of the decided instruction is output from the result output unit 54 to the discharge control unit 40 (step S007).

### [Detailed Operation of Electrode Manufacturing Apparatus 1]

### [Formation of Insulating Layer]

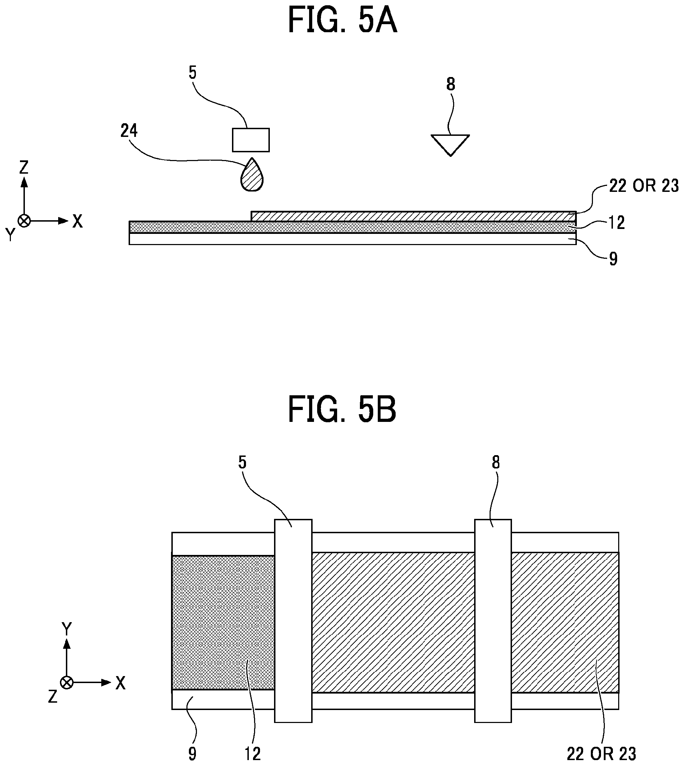

FIGS. 5A and 5B are conceptual diagrams of formation of the insulating layer 21 by the discharge of the liquid composition 24.

Referring to FIGS. 5A and 5B, a process for forming the insulating layer 21 in the electrode manufacturing apparatus 1 according to the present embodiment is described.

FIG. 5A is a side view of the electrode manufacturing apparatus 1 as viewed in the Y direction, and FIG. 5B is a plan view of the electrode manufacturing apparatus 1 as viewed in a Z direction.

In FIGS. 5A and 5B, the winding off part 10, the winding up part 11, the curing device 6, and the heater 7 illustrated in FIG. 1 is omitted for simplicity.

The electrode manufacturing apparatus 1 uses the liquid composition 24 for forming the resin layer 22 or the inorganic layer 23 as the insulating layer 21 to form the resin layer 22 or the inorganic layer 23 as the insulating layer 21 so that the surface of the electrode base 9 or the surface of the functional layer 12 provided on the electrode base 9 may be covered, and detects the surface condition of the resin layer 22 or the inorganic layer 23 as the insulating layer 21 with the surface detector 8 provided downstream of the discharger 5. The electrode base 9 or the functional layer 12 provided on the electrode base 9 does not merely have a running pattern spread over the entire surface but may be formed by intermittent coating or in a free shape. In addition, a printing shape of the resin layer 22 or the inorganic layer 23 as the insulating layer 21, which is to be formed, is not limited to a running pattern spread over the entire surface but may be achieved by intermittent coating or as a free shape.

FIGS. 6A through 6C are plan views of the electrode manufacturing apparatus 1, illustrating how a streak-like defect is produced.

Using FIGS. 6A through 6C, description is made how a streak-like defect 59 is produced in the course of formation of the resin layer 22 or the inorganic layer 23 as the insulating layer 21.

FIG. 6A illustrates a state where the streak-like defect 59 has been produced in the course of formation of the resin layer 22 or the inorganic layer 23 as the insulating layer 21. If the streak-like defect 59 has been produced in the course of discharge by the discharger 5, a log notifying that change in amount of discharge by the discharger 5 is unnecessary is only prepared (step S004) until the streak-like defect 59 reaches the surface detector 8.

FIG. 6B illustrates a state where the streak-like defect 59 as produced in the course of formation of the resin layer 22 or the inorganic layer 23 as the insulating layer 21 has reached the surface detector 8. If the streak-like defect 59 reaches the surface detector 8, an instruction to increase the discharge amount is prepared by the discharge instruction preparation unit 53 (step S006). The instruction to increase the discharge amount is sent from the discharge instruction preparation unit 53 to the discharge control unit 40 through the result output unit 54 so as to increase the amount of discharge of the liquid composition 24 by the discharger 5.

FIG. 6C illustrates a state after the instruction to increase the discharge amount is sent from the discharge instruction preparation unit 53 to the discharge control unit 40 through the result output unit 54 and the amount of discharge of the liquid composition 24 by the discharger 5 is increased. The discharge amount of the liquid composition 24 is increased so as to embed the streak-like defect 59 and suppress the production of another streak-like defect.

### (Position of Surface Detector)

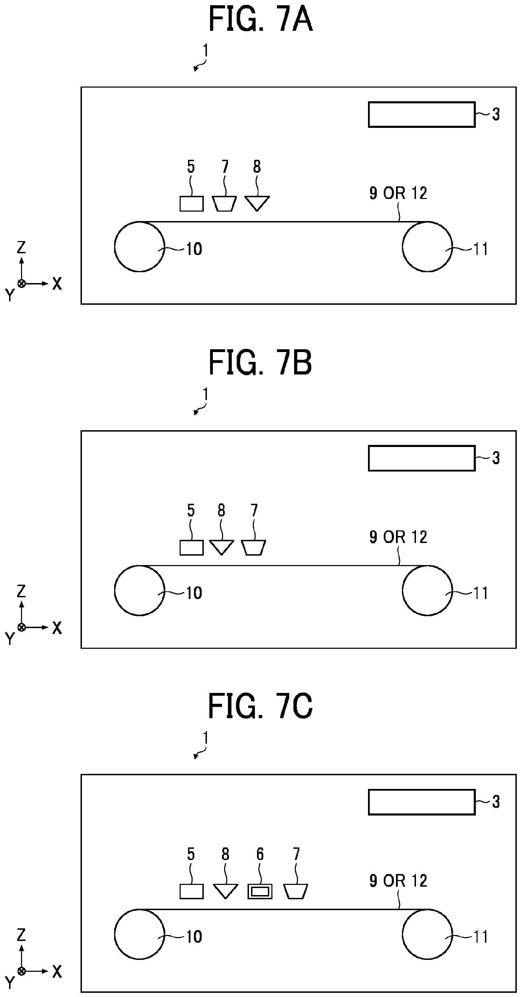

FIGS. 7A through 7C are each another example of the diagram illustrating the general arrangement of the electrode manufacturing apparatus 1 according to the present embodiment.

FIG. 7A illustrates the electrode manufacturing apparatus 1, which does not include the curing device 6 because the liquid composition 24 for forming the resin layer 22 or the inorganic layer 23 as the insulating layer 21 does not need a curing process.

As illustrated in FIG. 7B, the surface detector 8 may be provided on an upstream side of the heater 7.

If the surface detector 8 is to detect the surface condition before drying of the liquid composition 24, the surface detector 8 is preferably provided at a stage next to the discharger 5 for the reason to be stated later.

Even if the curing device 6 is required as illustrated in FIG. 7C, the surface detector 8 is preferably provided at the stage next to the discharger 5 for the reason to be stated later if the surface detector 8 is to detect the surface condition before the drying of the liquid composition 24.

Providing the surface detector 8 immediately after the discharger 5, that is to say, at the stage next to the discharger 5 brings about a merit inherent to the present disclosure. While the present disclosure is chiefly effective at suppressing the production of the streak-like defect 59, the insulating layer 21 after the production of the streak-like defect 59 illustrated in FIG. 6A is deemed to be faulty until the streak-like defect 59 is detected as illustrated in FIG. 6B and suppressed as illustrated in FIG. 6C. Therefore, the improvement in productivity attendant on the decrease in fraction defective is effected to a larger extent as the distance from the discharger 5 producing a defect to the surface detector 8 detecting a defect is shorter. Consequently, if a defect is detected before the drying of the liquid composition 24, it is desirable to provide the surface detector 8 immediately after the discharger 5, that is to say, at the stage next to the discharger 5.

In the case where detection with a specular reflection light-type camera or the like is difficult, such as the case where the liquid composition 24 before being dried by the heater 7 or being cured by the curing device 6 is transparent, for instance, it is desirable to provide the surface detector 8 on a downstream side of the heater 7 or the curing device 6.

### (Surface Detector)

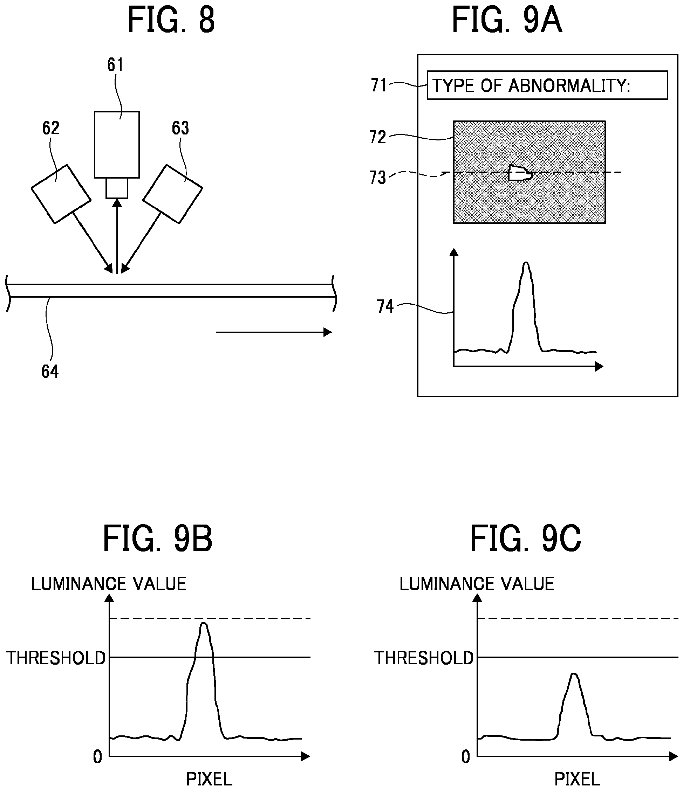

FIG. 8 illustrates an example of an optical system of the surface detector 8.

The surface detector 8 includes, as an illumination system, a visible light source 62 that irradiates an upper face of a detection target 64 with a visible light, and an infrared/ultraviolet (IR/UV) light source 63 that emits at least one of an ultraviolet light or an infrared light. As a matter of course, the surface detector 8 may only include one of the light sources.

The detection target 64 as an object of detection by the surface detector 8 refers to the electrode base 9 or the functional layer 12 provided on the electrode base 9, on which the resin layer 22 or the inorganic layer 23 as the insulating layer 21 is being formed.

The surface detector 8 includes a visible light camera 61 as a measurement system, and the visible light camera 61 may be replaced by an IR/UV light camera. The IR/UV light camera is to be arranged similarly to the visible light camera 61.

The surface detector 8 detects a streak-like defect contained in the detection target 64, based on an output signal from the visible light camera 61 or the IR/UV light camera in such measurement system.

FIG. 9A illustrates an example of a state where an image acquired by the surface detection image acquisition unit 51 after the detection of a defect by the surface detector 8 is displayed in the operation unit 34.

In this example, in addition to a defect spot image 72, defect type information 71 that is a result of analysis with the defect determination unit 52, a defect spot line 73, and a defect output signal graph 74 (graph representing the change in output luminance value or luminance ratio) are collectively displayed.

Outputting such information concerning a defect spot allows the user to specifically grasp the details of the defect as produced.

FIGS. 9B and 9C illustrate a case where the luminance value is high and a case where the luminance value is low, respectively. A correspondence relation between the pattern of such change (increase or decrease) in luminance value and the type of abnormality allows an accurate determination of the presence or absence of a defect and the level of a defect as a result of accumulation of experimental data for each type of abnormality that can actually occur.

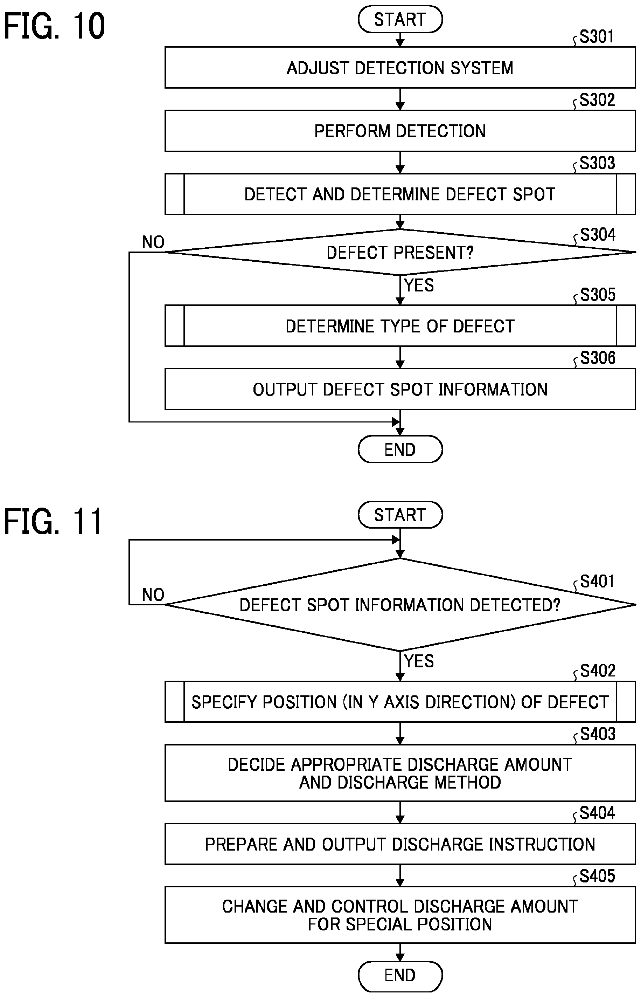

FIG. 10 is a flowchart of defect detection.

Initially, a detection system is adjusted in a state where the detection target 64 is not arranged (step S301). As an example, a blue visible light source 31 is lit so as to perform image capturing with a visible light by an image capturing device 4. As a result of such adjustment, the luminance of light that directly enters the visible light camera 61 is so adjusted as to be the same or essentially the same as the upper limit of a measurable range.

Next, detection is begun. An image of the detection target 64 is captured, and an output signal of the image is taken into the surface detection image acquisition unit 51. During the taking in of the output signal, signals for one line (4096 pixels, for instance) are subjected to white shading so as to generate the luminance value (step S302).

Thereafter, the defect determination unit 52 detects and determines a spot of abnormality. As an example, the defect determination unit 52 detects, from the image as acquired, a region (a group of pixels) formed of pixels with luminance values exceeding a specified threshold and determines the region as a "defect spot" if the region has an area exceeding a specified value. In this example, the position (in the Y direction) of a defect and the timing of conveyance, with which the defect has been detected, are also acquired (step S303).

If it is determined that a defect has been detected (step S304), the processing proceeds to step S305. If it is determined that no defects have been detected (step S304), this routine is terminated.

If a defect has been detected, the type of the defect as detected is determined (step S305), and the type of the defect and defect spot information are output (step S306).

### (Change in Discharge Amount)

FIG. 11 is a flowchart of discharge amount regulation based on defect spot information output.

Initially, the surface detector 8, the surface detection image acquisition unit 51, and the defect determination unit 52 detect the defect spot information (step S401).

Further, the surface detection image acquisition unit 51 and the defect determination unit 52 specify the position (position in a y-axis direction) of the defect (step S402).

Then, the discharge instruction preparation unit 53 decides a discharge amount appropriate to the defect (an increased discharge amount, for instance) and a method for changing the discharge amount (change in discharge pattern or change in printing resolution, for instance) (step S403).

The discharge instruction preparation unit 53 prepares an instruction as to the discharge, and the result output unit 54 outputs the instruction to the discharge control unit 40 (step S404).

The discharge control unit 40 controls the discharge with respect to the special position as instructed, based on the discharge amount and the discharge method as instructed (step S405).

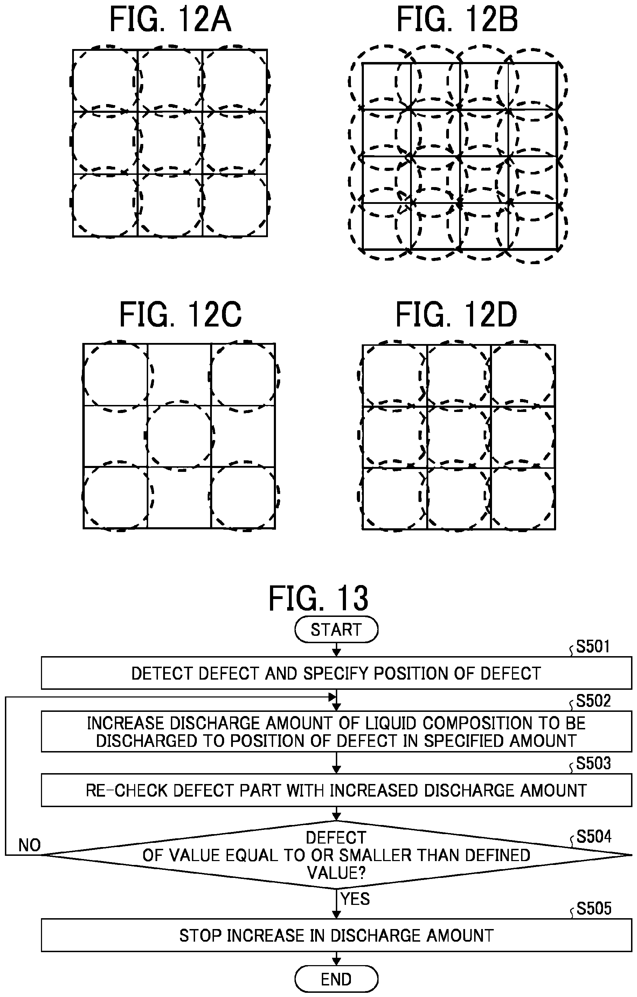

FIGS. 12A through 12D illustrate examples of the method for changing the discharge amount.

The printing resolution in FIG. 12A is changed to the printing resolution in FIG. 12B. Such change in printing resolution is an exemplary method for increasing the discharge amount of the liquid composition 24.

In this instance, the printing resolution per unit area is changed from 3 × 3 in FIG. 12A to 4 × 4 in FIG. 12B. The printing resolution is changed from 3 × 3 to 4 × 4 without changing the size of dots to be printed, so as to increase the total discharge amount per unit area of the liquid composition 24.

A printing pattern in FIG. 12C is changed to a printing pattern in FIG. 12D. Such change in printing pattern is another exemplary method for increasing the discharge amount of the liquid composition 24.

In this instance, although a printing resolution per unit area of 3 × 3 is not changed, the coverage rate is changed from about 56% in FIG. 12C to 100% in FIG. 12D so as to increase the total discharge amount per unit area of the liquid composition 24.

Naturally, it is common as another method for changing the discharge amount to increase energy input to a drive source for a nozzle of the discharger 5 so as to increase the volume itself of the liquid composition 24 discharged through the nozzle.

The discharge amount may be increased over the entire region of discharge so as to embed the streak-like defect 59 or may be only increased on the periphery of a region of the streak-like defect 59. The surface detection image acquisition unit 51 and the defect determination unit 52 acquire information on the position in the Y direction of a defect, and the information on the position in the Y direction of a defect is additionally used by the discharge instruction preparation unit 53 to prepare a discharge instruction. In such case, the discharge amount does not need to be changed in a region other than the region of the streak-like defect 59, so that the film thickness is less affected as a whole.

In addition to the information on the position in the Y direction as defect position information, conveyance information (containing the conveyance speed and time information) on the electrode base 9 or the functional layer 12 provided on the electrode base 9, which is an object of conveyance, is considered to specify the position of a defect on the object of conveyance, as is the case with a normal production line.

### (Gradual Remedy of Defect)

FIG. 13 is a flowchart of a method for gradually regulating the discharge amount.

Following the flowchart of FIG. 13, an operation to gradually regulate the discharge amount is described.

Specifically, a defect is detected first and the position of the defect (the streak-like defect 59 in FIGS. 6A through 6C) is specified. As described above, the position of the streak-like defect 59 on the electrode base 9 or the functional layer 12 provided on the electrode base 9 is specified from the position in the Y direction and the conveyance speed in the conveyance direction X (step S501).

Then, the discharge amount of the liquid composition 24, which is to be discharged to the specified position of the defect, is increased in a specified amount (step S502). In this regard, a small amount will be fine as an increment of the liquid composition 24. Such small amount can further prevent the liquid composition 24, to fill (make up) a defect part, from being applied to the defect part in an amount larger than the amount for properly filling the defect part.

When the defect part (the streak-like defect 59 in FIGS. 6A through 6C) with an increased discharge amount of the liquid composition 24 is conveyed and reaches the surface detector 8, the defect part with an increased discharge amount of the liquid composition 24 is re-detected (step S503).

At this time, the defect determination unit 52 determines whether the defect as detected is of a value equal to or smaller than a defined value (that is to say, is ignorable as a defect) (step S504).

If it is determined that the defect is not of a value equal to or smaller than the defined value, that is to say, is not remedied in spite of the increase in discharge amount, the defect determination unit 52 increases again the discharge amount of the liquid composition 24, which is to be discharged to the position of the defect, in the specified amount through the discharge instruction preparation unit 53, the result output unit 54, and the discharge control unit 40 (step S502).

Thereafter, if the defect is still not remedied (NO in step S504), the above process is repeated.

If it is determined that the defect is of a value equal to or smaller than the defined value (YES in step S504), the defect is considered as remedied as a result of the increase in discharge amount, so that the increase in discharge amount is stopped (step S505).

The electrode manufacturing apparatus 1 according to an embodiment of the present disclosure includes the discharger 5, which discharges the liquid composition 24 onto the electrode base 9 or the functional layer 12 provided on the electrode base 9 so as to form the insulating layer 21, the discharge control unit 40, which controls the discharger 5, and the surface detector 8, which detects the surface condition of the insulating layer 21 after the discharge of the liquid composition 24 by the discharger 5. The discharge control unit 40 controls the discharger 5 based on the surface condition detected by the surface detector 8.

According to such features, the surface detector 8 detects the surface condition of the insulating layer 21 after the discharge of the liquid composition 24 and the discharge control unit 40 controls the discharger 5 based on the detected surface condition, so that discharge control corresponding to the detected surface condition is thereafter carried out with respect to the surface of the insulating layer 21.

The insulating layer 21 in the electrode manufacturing apparatus 1 according to an embodiment of the present disclosure includes the resin layer 22.

According to such feature, the surface detector 8 detects the surface condition of the resin layer 22 after the discharge of the liquid composition 24 and the discharge control unit 40 controls the discharger 5 based on the detected surface condition, so that discharge control for the resin layer 22 that corresponds to the detected surface condition is thereafter carried out with respect to the surface of the resin layer 22.

The insulating layer 21 in the electrode manufacturing apparatus 1 according to an embodiment of the present disclosure includes the inorganic layer 23.

According to such feature, the surface detector 8 detects the surface condition of the inorganic layer 23 after the discharge of the liquid composition 24 and the discharge control unit 40 controls the discharger 5 based on the detected surface condition, so that discharge control for the inorganic layer 23 that corresponds to the detected surface condition is thereafter carried out with respect to the surface of the inorganic layer 23.

In the electrode manufacturing apparatus 1 according to an embodiment of the present disclosure, information based on the surface condition detected by the surface detector 8 includes information based on a defect, and the discharge control unit 40 increases the amount of the liquid composition 24 discharged by the discharger 5 so that the defect may be eliminated.

According to such features, if information based on a defect produced at the surface of the insulating layer 21 after the discharge of the liquid composition 24 has been detected, the amount of the liquid composition 24 is increased in order to eliminate the defect as a target, and the defect is thereafter eliminated from the surface of the insulating layer 21.

In the electrode manufacturing apparatus 1 according to an embodiment of the present disclosure, the information based on a defect includes information about the position of a defect.

According to such feature, the amount of the liquid composition 24 is increased in order to eliminate a defect as a target, based on the information about the position of a defect, which is the information based on a defect produced at the surface of the insulating layer 21 after the discharge of the liquid composition 24. Consequently, the defect is thereafter efficiently eliminated from a spot on the surface of the insulating layer 21 where the defect is present.

The discharge control unit 40 in the electrode manufacturing apparatus 1 according to an embodiment of the present disclosure gradually increases the amount of the liquid composition 24 discharged by the discharger 5 so that a defect may gradually be eliminated.

According to such feature, the amount of the liquid composition 24 is increased in order to eliminate a defect produced at the surface of the insulating layer 21 after the discharge of the liquid composition 24. On this occasion, since the amount of the liquid composition 24 discharged by the discharger 5 is gradually increased so that the defect may gradually be eliminated, the discharge amount of the liquid composition 24 is prevented from being too large for making up the defect.

In the electrode manufacturing apparatus 1 according to an embodiment of the present disclosure, the printing resolution is changed to increase the amount of the liquid composition 24.

According to such feature, the printing resolution is changed to increase the discharge amount of the liquid composition 24, so that a defect produced at the surface of the insulating layer 21 is eliminated by a simple control.

In the electrode manufacturing apparatus 1 according to an embodiment of the present disclosure, the discharge pattern is changed to increase the amount of the liquid composition 24.

According to such feature, the discharge pattern is changed to increase the discharge amount of the liquid composition 24, so that a defect produced at the surface of the insulating layer 21 is eliminated by a simple control.

## Claims

1. An electrode manufacturing apparatus (1) comprising:
an applier (5) configured to apply a liquid composition (24) to form an insulating layer (21) onto an electrode base (9) or a functional layer (12) on the electrode base (9);
a controller (40) configured to control the applier (5); and
a surface detector (8) configured to detect a surface condition of the liquid composition (24) or the insulating layer (21) on the electrode base (9) or the functional layer (12),
wherein the controller (40) is configured to control the applier (5) based on the surface condition of the liquid composition (24) or the insulating layer (21) detected by the surface detector (8), **characterized in that**
the controller (40) is configured to change a pattern to be formed on the electrode base (9) or the functional layer (12) to increase an amount of the liquid composition (24) to be applied onto the electrode base (9) or the functional layer (12).

2. The electrode manufacturing apparatus (1) according to claim 1, wherein the insulating layer (21) includes a resin layer (22).

3. The electrode manufacturing apparatus (1) according to claim 1, wherein the insulating layer (21) includes an inorganic layer (23).

4. The electrode manufacturing apparatus (1) according to any one of claims 1 through 3,
wherein the surface condition detected by the surface detector (8) includes a defect (59) in the liquid composition (24) or the insulating layer (21), and
the controller (40) controls the applier (5) to increases an amount of the liquid composition (24) to be applied onto the defect (59) in the liquid composition (24) or the insulating layer (21).

5. The electrode manufacturing apparatus (1) according to claim 4,
wherein the surface condition includes a position of the defect (59).

6. The electrode manufacturing apparatus (1) according to any one of claims 1 through 5,
wherein the surface condition detected by the surface detector (8) includes a defect (59) in the liquid composition (24) or the insulating layer (21), and
the controller (40) controls the applier (5) to gradually increases an amount of the liquid composition (24) to be applied onto the defect (59) in the liquid composition (24) or the insulating layer (21).

7. The electrode manufacturing apparatus (1) according to claim 6,
wherein the controller (40) controls the applier (5) and the surface detector (8) to repeat:
gradually increasing an amount of the liquid composition (24) to be applied onto the defect (59) in the liquid composition (24) or the insulating layer (21); and
detecting the defect (59) again in the liquid composition (24) or the insulating layer (21).

8. A method for manufacturing an electrode, the method comprising:
applying a liquid composition (24) to form an insulating layer (21) onto an electrode base (9) or a functional layer (12) on the electrode base (9);
detecting a surface condition of the liquid composition (24) or the insulating layer (21) on the electrode base (9) or the functional layer (12); and
controlling the applying based on the surface condition of the liquid composition (24) or the insulating layer (21) detected by the detecting, **characterized in that**
in the controlling, increasing an amount of the liquid composition (24) to be applied onto the electrode base (9) or the functional layer (12) by changing a pattern to be formed on the electrode base (9) or the functional layer (12).

## Patentansprüche

1. Vorrichtung (1) zur Herstellung einer Elektrode, die umfasst:
einen Applikator (5), der dazu konfiguriert ist, eine flüssige Zusammensetzung (24) aufzutragen, um eine Isolierschicht (21) auf einer Elektrodenbasis (9) oder eine Funktionsschicht (12) auf der Elektrodenbasis (9) zu bilden;
eine Steuerung (40), die dazu konfiguriert ist, den Applikator (5) zu steuern; und
einen Oberflächendetektor (8), der dazu ausgebildet ist, einen Oberflächenzustand der flüssigen Zusammensetzung (24) oder der Isolierschicht (21) auf der Elektrodenbasis (9) oder der Funktionsschicht (12) zu erfassen,
wobei die Steuerung (40) konfiguriert ist, um den Applikator (5) auf der Grundlage des vom Oberflächendetektor (8) erfassten Oberflächenzustands der flüssigen Zusammensetzung (24) oder der Isolierschicht (21) zu steuern, **dadurch gekennzeichnet, dass**
die Steuerung (40) konfiguriert ist, um ein auf der Elektrodenbasis (9) oder der Funktionsschicht (12) zu bildendes Muster zu ändern, um eine Menge der auf die Elektrodenbasis (9) oder die Funktionsschicht (12) aufzutragenden flüssigen Zusammensetzung (24) zu erhöhen.

2. Vorrichtung (1) zur Elektrodenherstellung nach Anspruch 1, wobei die Isolierschicht (21) eine Harzschicht (22) umfasst.

3. Vorrichtung (1) zur Elektrodenherstellung nach Anspruch 1, wobei die Isolierschicht (21) eine anorganische Schicht (23) umfasst.

4. Vorrichtung zur Herstellung einer Elektrode (1) nach einem der Ansprüche 1 bis 3,
wobei der vom Oberflächendetektor (8) erfasste Oberflächenzustand einen Defekt (59) in der flüssigen Zusammensetzung (24) oder der Isolierschicht (21) umfasst, und
die Steuerung (40) den Applikator (5) steuert, um eine Menge der flüssigen Zusammensetzung (24) zu erhöhen, die auf den Defekt (59) in der flüssigen Zusammensetzung (24) oder der Isolierschicht (21) aufzutragen ist.

5. Vorrichtung zur Herstellung einer Elektrode (1) nach Anspruch 4,
wobei die Oberflächenbeschaffenheit eine Position des Defekts (59) einschließt.

6. Vorrichtung zur Herstellung einer Elektrode (1) nach einem der Ansprüche 1 bis 5,
wobei der vom Oberflächendetektor (8) erfasste Oberflächenzustand einen Defekt (59) in der flüssigen Zusammensetzung (24) oder der Isolierschicht (21) umfasst, und
die Steuerung (40) den Applikator (5) steuert, um die Menge der flüssigen Zusammensetzung (24), die auf den Defekt (59) in der flüssigen Zusammensetzung (24) oder der Isolierschicht (21) aufzutragen ist, allmählich zu erhöhen.

7. Vorrichtung zur Herstellung einer Elektrode (1) nach Anspruch 6,
wobei die Steuerung (40) den Applikator (5) und den Oberflächendetektor (8) steuert, um Folgendes zu wiederholen:
allmähliches Erhöhen einer Menge der flüssigen Zusammensetzung (24), die auf den Defekt (59) in der flüssigen Zusammensetzung (24) oder der Isolierschicht (21) aufgetragen werden soll; und
erneutes Erkennen des Defekts (59) in der flüssigen Zusammensetzung (24) oder der Isolierschicht (21).

8. Verfahren zur Herstellung einer Elektrode, wobei das Verfahren umfasst:
Aufbringen einer flüssigen Zusammensetzung (24) zum Bilden einer Isolierschicht (21) auf einer Elektrodenbasis (9) oder einer Funktionsschicht (12) auf der Elektrodenbasis (9);
Detektieren eines Oberflächenzustands der flüssigen Zusammensetzung (24) oder der Isolierschicht (21) auf der Elektrodenbasis (9) oder der Funktionsschicht (12); und
Steuern des Auftragens auf der Grundlage des beim Detektieren erfassten Oberflächenzustands der flüssigen Zusammensetzung (24) oder der Isolierschicht (21), **dadurch gekennzeichnet, dass**
bei der Steuerung eine Menge der auf die Elektrodenbasis (9) oder die Funktionsschicht (12) aufzutragenden flüssigen Zusammensetzung (24) durch Ändern eines auf der Elektrodenbasis (9) oder der Funktionsschicht (12) zu bildenden Musters erhöht wird.

## Revendications

1. Appareil de fabrication d'électrode (1) comprenant :
un applicateur (5) configuré pour appliquer une composition liquide (24) afin de former une couche isolante (21) sur une base d'électrode (9) ou une couche fonctionnelle (12) sur la base d'électrode (9) ;
un dispositif de commande (40) configuré pour commander l'applicateur (5) ; et
un détecteur de surface (8) configuré pour détecter une condition de surface de la composition liquide (24) ou de la couche isolante (21) sur la base d'électrode (9) ou la couche fonctionnelle (12),
dans lequel le dispositif de commande (40) est configuré pour commander l'applicateur (5) sur la base d'une condition de surface de la composition liquide (24) ou de la couche isolante (21) détectée par le détecteur de surface (8),
**caractérisé en ce que**
le dispositif de commande (40) est configuré pour modifier un motif à former sur la base d'électrode (9) ou la couche fonctionnelle (12) afin d'augmenter une quantité de la composition liquide (24) à appliquer sur la base d'électrode (9) ou la couche fonctionnelle (12).

2. Appareil de fabrication d'électrode (1) selon la revendication 1, dans lequel la couche isolante (21) inclut une couche de résine (22).

3. Appareil de fabrication d'électrode (1) selon la revendication 1, dans lequel la couche isolante (21) inclut une couche inorganique (23).

4. Appareil de fabrication d'électrode (1) selon l'une quelconque des revendications 1 à 3,
dans lequel la condition de surface détectée par le détecteur de surface (8) inclut un défaut (59) dans la composition liquide (24) ou la couche isolante (21), et
le dispositif de commande (40) commande l'applicateur (5) pour augmenter une quantité de la composition liquide (24) à appliquer sur le défaut (59) dans la composition liquide (24) ou la couche isolante (21).

5. Appareil de fabrication d'électrode (1) selon la revendication 4, dans lequel la condition de surface inclut une position du défaut (59).

6. Appareil de fabrication d'électrode (1) selon l'une quelconque des revendications 1 à 5,
dans lequel la condition de surface détectée par le détecteur de surface (8) inclut un défaut (59) dans la composition liquide (24) ou la couche isolante (21), et
le dispositif de commande (40) commande l'applicateur (5) pour augmenter progressivement une quantité de la composition liquide (24) à appliquer sur le défaut (59) dans la composition liquide (24) ou la couche isolante (21).

7. Appareil de fabrication d'électrode (1) selon la revendication 6,
dans lequel le dispositif de commande (40) commande l'applicateur (5) et le détecteur de surface (8) pour répéter :
l'augmentation progressive d'une quantité de la composition liquide (24) à appliquer sur le défaut (59) dans la composition liquide (24) ou la couche isolante (21) ; et
à nouveau la détection du défaut (59) dans la composition liquide (24) ou la couche isolante (21).

8. Procédé de fabrication d'une électrode, le procédé comprenant :
l'application d'une composition liquide (24) afin de former une couche isolante (21) sur une base d'électrode (9) ou une couche fonctionnelle (12) sur la base d'électrode (9) ;
la détection d'une condition de surface de la composition liquide (24) ou de la couche isolante (21) sur la base d'électrode (9) ou la couche fonctionnelle (12) ; et
la commande de l'application sur la base de la condition de surface de la composition liquide (24) ou de la couche isolante (21) détectée par la détection, **caractérisé en ce que**
lors de la commande, l'augmentation d'une quantité de la composition liquide (24) à appliquer sur la base d'électrode (9) ou la couche fonctionnelle (12) par modification d'un motif à former sur la base d'électrode (9) ou la couche fonctionnelle (12).
